# FASCICULE DE BREVET EUROPEEN

(11) **EP 1 681 230 B1**
(45) Date de publication et mention de la délivrance du brevet: **02.01.2008**
(21) Numéro de dépôt: 06290109.5
(22) Date de dépôt: 17.01.2006
(51) Int. Cl.: B62M 3/08, B62M 9/08

(54) **Ensemble de pédalier de bicyclette pour harmoniser le pédalage du cycliste**
Fahrradtretkurbeleinheit zur Harmonisierung der Tretarbeit des Radfahrers
Bicycle crank assembly for harmonizing the pedalling of the cyclist

(30) Priorité: 18.01.2005 FR 0500505
(43) Date de publication de la demande: 19.07.2006
(73) Titulaire: Garnier, Michel, 8399 Windhof (LU)
(72) Inventeur: Garnier, Michel, 8399 Windhof (LU)
(74) Mandataire: Honoré, Anne-Claire

(56) Documents cités:
- DE-A1- 2 219 530
- DE-A1- 3 631 302
- DE-A1- 3 709 482
- DE-A1- 19 636 358
- DE-C- 114 144
- DE-U1- 8 522 573
- DK-C- 64 514
- FR-A- 821 216
- FR-A- 2 623 769
- GB-A- 2 385 569
- US-A- 515 449
- US-A- 4 442 732
- US-A- 4 569 249
- US-A- 4 865 577
- US-A- 5 549 314

## Description

La présente invention concerne un pédalier pour bicyclette et plus particulièrement un pédalier comprenant un arbre, une paire de manivelles et au moins un engrenage à chaîne.

Le mécanisme d'entraînement de la bicyclette est constitué du pédalier conforme à l'invention, d'un engrenage à chaîne solidarisé au moyeu de la roue arrière, et d'une chaîne d'entraînement tendue entre l'engrenage à chaîne du pédalier et l'engrenage arrière.

Chaque extrémité de manivelle distante de l'arbre du pédalier, extrémité dite libre, supporte une pédale. Les pédales sont poussées par les pieds du cycliste pour transmettre un couple à l'engrenage arrière à l'aide de la chaîne d'entraînement.

Classiquement, les pédales utilisées sont constituées d'un corps de pédale qui comporte une platine globalement horizontale, monté libre à rotation autour d'un axe dit de pédale. La platine comprend sur au moins une de ses faces des éléments d'enclenchement aptes à coopérer avec des éléments d'accrochage solidaires de la semelle d'une chaussure du cycliste. Ces pédales sont dites automatiques.

L'expérience a révélé que pour utiliser au mieux les muscles des membres inférieurs du cycliste, il était avantageux de disposer d'une augmentation du rayon de pédalage sur l'arc descendant du mouvement de chaque pédale avec, au contraire, une réduction dudit rayon sur l'arc ascendant.

A cet égard, on connaît la manivelle perfectionnée à pédale désaxée objet du brevet français FR 2 623 769 qui divulgue un pédalier de cycle selon le préambule de la revendication 1. Cet pédalier de cycle comporte une manivelle pour un plateau de forme circulaire, munie de pédale désaxée grâce à un dispositif excentrique, de telle sorte que, lorsque la pédale est horizontale, le plan d'appui du pied est décalé vers l'avant d'une quantité égale ou inférieure à la valeur de l'excentricité. Ce dispositif permet d'augmenter le rayon de pédalage sur l'arc descendant du mouvement de chaque pédale et, au contraire, de réduire ledit rayon sur l'arc ascendant.

De même, le déposant a déjà imaginé des pédales, décrites dans la demande de brevet internationale WO 2004/044458, où la face supérieure de la platine s'étend sous l'axe de pédale suivant une distance a et où le plan d'appui du pied sur la platine se situe devant ledit axe suivant une distance b. Ces perfectionnements notables améliorent la distribution du travail musculaire du cycliste pendant le pédalage, notamment pour diminuer la fatigue à égalité de puissance et de travail développés. Par la suite, on appellera point d'appui du pied sur la pédale le point défini par l'intersection entre l'axe d'appui du pied (qui appartient au plan sagittal du cycliste passant par le métatarse du gros orteil) et le dessus de la semelle de la chaussure.

En comparaison des pédales classiques, ces pédales commercialisées sous le nom de « VISTA » par le demandeur, présentent en outre d'autres avantages. D'abord, avec les pédales classiques, à proximité du point mort haut, la distance séparant le point d'appui du pied sur la platine et l'axe de rotation du pédalier, distance représentant le bras de levier du point d'appui, est égale à la longueur de la manivelle à laquelle s'ajoute la moitié de l'épaisseur de la platine et l'épaisseur de la semelle de la chaussure. Au contraire, à proximité du point mort bas, cette distance est égale à la longueur de la manivelle de laquelle se retranche la moitié de l'épaisseur de la platine et l'épaisseur de la semelle. Dans le cas des pédales « VISTA », à proximité du point mort haut, le bras de levier du point d'appui est diminué de la longueur correspondant à la somme de la moitié de l'épaisseur de la platine et de la distance a, tandis qu'à proximité du point mort bas, il est prolongé de cette longueur. Autrement dit, les pédales « VISTA » procurent une réduction du bras de levier lorsque celui-ci serait maximal dans le cas de pédales classiques, et inversement. Cet aspect contribue à diminuer les variations du bras de levier au cours d'un cycle de pédalage.

Néanmoins, un pédalier comportant des pédales du type « VISTA » n'est pas complètement satisfaisant. En effet le déposant a d'abord constaté empiriquement que la vitesse angulaire de la droite passant par l'axe du pédalier et par le point d'appui du pied (appelé par la suite droite D) est un critère prépondérant pour la fatigue engendrée par le pédalage. Il résulte des nombreux tests qu'il a menés, qu'une vitesse angulaire constante de cette droite lorsque la pédale est dans le quadrant antérieur supérieur garantit une diminution de la fatigue du cycliste pour un effort déterminé.

Plus précisément, cet aspect empirique s'explique de manière théorique. A chaque instant, la puissance à fournir à la bicyclette est égale au produit de sa vitesse d'avancement par la force nécessaire pour vaincre les effets de la gravité, les frottements mécaniques internes à la bicyclette et les frottements aérodynamiques. En régime constant, cette puissance est globalement constante et directement délivrée par la chaîne d'entraînement en étant égale au produit de sa vitesse de défilement par la somme des efforts tangentiels appliqués par les dents du plateau en prise. Il est connu que, dans sa recherche d'efficacité et de rendement maximum, le cycliste doit transmettre la puissance la plus constante possible afin d'harmoniser son pédalage, en évitant les saccades dans les mouvements de ses jambes. Souvent, lorsque le cycliste est fatigué, il va fournir des efforts importants dans l'arc descendant du mouvement de la pédale, et des efforts quasi nuls aux points morts haut et bas ainsi que dans l'arc ascendant. Ce type de pédalage est moins efficace et plus fatiguant qu'un pédalage où la puissance instantanée délivrée par le cycliste est la plus uniforme possible tout au long d'un cycle de pédalage.

En particulier, le déposant s'est attaché à ce que la puissance développée soit globalement constante lorsque la pédale décrit le quadrant antérieur supérieur où il est connu que le pédalage est délicat et abîme les muscles, les tendons et les articulations du genou qui est alors presque fixe, au contraire des trois autres quadrants. Par ailleurs, en raison de la présence de deux manivelles dans la construction d'un pédalier, la configuration dudit pédalier d'un point de vue cinématique doit être équivalente que les pédales soient au point mort haut ou au point mort bas. Le raisonnement qui sera mené par la suite pour une pédale quelconque dans son mouvement dans les deux quadrants antérieurs supérieur et inférieur doit également s'appliquer pour l'autre pédale lorsque celle-ci sera dans les mêmes quadrants. De ce fait, le déposant ne s'est attaché à rendre la puissance développée globalement constante que dans le quadrant antérieur supérieur, le quadrant antérieur inférieur n'autorisant que le retour harmonieux et sans à-coups à la configuration cinématique du pédalier telle que lorsque la pédale était au point mort haut.

Or, la puissance développée à chaque instant par le cycliste est égale au produit de la force tangentielle qu'il applique sur la pédale au niveau du point d'appui, par la distance séparant ce point de l'axe du pédalier (distance appelée précédemment bras de levier), et par la vitesse angulaire de la droite D. Ainsi la suppression des variations de la vitesse angulaire D permet en conséquence d'atténuer les variations de la force nécessaire à appliquer au niveau du point d'appui pour développer une puissance globalement uniforme quelle que soit la position angulaire de la manivelle dans le quadrant supérieur antérieur. L'effort étant essentiellement musculaire, on conçoit aisément l'intérêt de l'économie réalisée par une meilleure linéarisation de l'effort de pédalage, contribuant à un équilibre physiologique accru du cycliste et à des efforts sur la chaîne et les engrenages avant et arrière mieux répartis.

Dans le cas d'un pédalier comportant des pédales « VISTA », bien que, à vitesse de rotation de la manivelle constante, le point d'appui du pied décrive lors du pédalage une courbe circulaire à vitesse constante par rapport à un référentiel fixe lié au cadre de la bicyclette (le corps de pédale subissant une translation circulaire régulière), la droite D liant ce point à l'axe du pédalier présente une vitesse angulaire variable dans son mouvement de rotation autour de l'axe du pédalier. Les calculs montrent que, pour une vitesse angulaire de la manivelle de 10 degrés par seconde, la vitesse angulaire moyenne de la droite D lorsque la pédale est à proximité du point mort haut est approximativement de 8,4 degrés par seconde, et 10,8 degrés par seconde à proximité du point mort bas. Lorsque la manivelle est proche de l'horizontale, la vitesse angulaire moyenne de la droite D est 8,8 degrés par seconde. Ces vitesses moyennes sont directement liées au valeur des distances a et b.

On connaît le pédalier objet du brevet allemand DE 2.219.530 qui divulgue un plateau de forme elliptique dont la variation de diamètre et la position des manivelles, par rapport à ladite forme elliptique du plateau, contribuent à réduire l'effort de pédalage que doit fournir le cycliste lorsque la manivelle se situe au point mort haut.

La présente invention a pour but d'associer la technologie des pédales "VISTA" décrites précédemment à celle d'un plateau de diamètre variable mais de forme particulière non elliptique, la combinaison de ces deux technologies produisant un effet technique remarquable et inattendu qui, non seulement permet au cycliste de pédaler en fournissant une puissance uniforme et constante, mais de plus permet avantageusement d'obtenir un mouvement circulaire du point d'appui du pied à vitesse non constante garantissant un pédalage harmonieux et non fatigant pour le cycliste et une vitesse angulaire de la droite D par rapport à l'axe du pédalier qui est sensiblement constante lorsque la pédale est dans le quadrant antérieur supérieur.

A cet effet et conformément à l'invention, il est proposé un pédalier de cycle comportant un arbre, une paire de manivelle et au moins un engrenage à chaîne apte à coopérer avec une chaîne d'entraînement, chaque manivelle supportant à son extrémité libre une pédale comportant un corps de pédale constitué d'une platine munie sur sa face supérieure de moyens de blocage avant et arrière d'une chaussure et sur l'un de ses bords longitudinaux d'un étui contenant un axe dit de pédale, libre à rotation, apte à être fixé à l'extrémité libre d'une manivelle, la platine étant solidarisée à l'étui de sorte que d'une part, sa face supérieure s'étende sous l'axe de pédale suivant une distance a et que d'autre part l'axe d'appui du pied sur la platine appartenant au plan frontal du cycliste passant par la métatarse de son gros orteil lorsqu'il pédale se situe devant l'axe de pédale suivant une distance b. Ce pédalier est remarquable en ce que l'engrenage à chaîne consiste en au moins un plateau denté à diamètre variable présentant une symétrie centrale unique par rapport à l'axe de pédalier, chaque moitié du plateau ayant au moins une première zone où la ligne primitive de la denture augmente continûment depuis son rayon minimum jusqu'à son rayon maximum, et une seconde zone où le rayon de la ligne primitive décroît continûment jusqu'à sa valeur minimale, l'axe principal de la manivelle adjacente au plateau formant un angle dit de calage, réglable, avec l'axe reliant les points de la ligne primitive pour lesquels le rayon est minimum.

Sur les dessins annexés donnés à titre d'exemple non limitatif d'une des formes de réalisation de l'objet de l'invention :
- la figure 1 représente une schématisation des trajectoires de l'axe de pédale et du point d'appui du pied sur la pédale lors de l'utilisation d'un pédalier comportant des pédales du type « VISTA »,
- la figure 2 représente un exemple de plateau appartenant au pédalier conforme à l'invention, le point de tangence du brin tendu de la chaîne d'entraînement correspondant au rayon minimum de la ligne primitive de la denture du plateau,
- la figure 3 représente une vue en perspective d'un exemple de pédale appartenant au pédalier conforme à l'invention,
- la figure 4 représente un pédalier conforme à l'invention, comprenant deux plateaux.

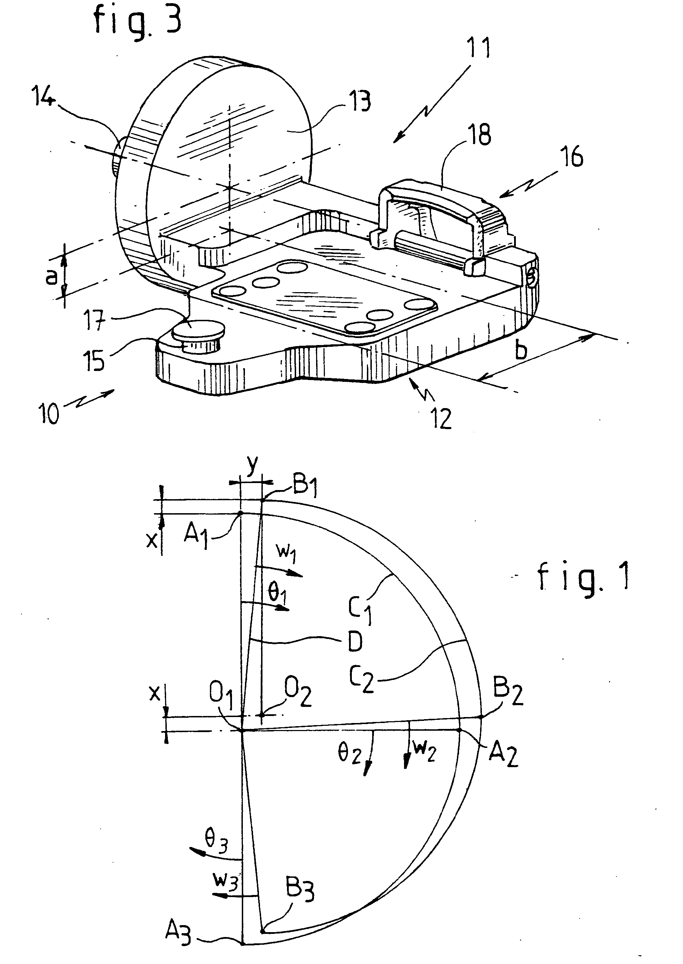

En se référant à la figure 1, un demi-cercle C₁ de centre O₁ (qui est le point symbolisant l'axe du pédalier) schématise la trajectoire que suit l'axe de pédale (représenté dans différentes positions par les points A₁, A₂, A₃) lorsque la pédale se situe lors de son mouvement, dans les quadrants antérieur supérieur et antérieur inférieur. Le rayon de ce demi-cercle C₁ est égal à la longueur de la manivelle, c'est-à-dire l'entraxe séparant l'axe du pédalier et l'axe de pédale. Les points B₁, B₂, B₃ représentent le point d'appui du pied sur la pédale dans différentes positions de la manivelle, respectivement lorsque la pédale est au point mort haut (axe de la pédale en A₁), à l'horizontale de l'axe du pédalier (axe de la pédale en A₂) et au point mort bas (axe de la pédale en A₃). En considérant que la pédale subit une translation circulaire, à chaque instant, le point d'appui du pied sur la pédale est décalé de l'axe de pédale vers l'avant suivant une distance y et vers le bas suivant une distance x. La trajectoire du point d'appui du pied sur la pédale est schématisée par le demi-cercle C₂ identique à C₁ et centré sur le point O₂ décalé du point O₁ vers l'avant de la distance y et vers le dessus de la distance x. On comprend bien que les distances x et y sont liées aux distances a et b afférentes à l'utilisation de pédales « VISTA » : la somme de la distance a et de la distance x est égale à l'épaisseur de la semelle de la chaussure tandis que la distance y est égale à la distance b. La droite passant par O₁ et le point d'appui est nommée D comme précédemment et représentée en passant par B₁. La vitesse angulaire moyenne de la manivelle est nommée θ₁, θ₂, θ₃ à proximité respectivement du point mort haut, d'une position horizontale de la manivelle, et du point mort bas. La vitesse angulaire moyenne de la droite D en rotation par rapport à O₁ lors du pédalage est nommée w₁, w₂, w₃ à proximité respectivement du point mort haut, d'une position horizontale de la manivelle, du point mort bas.

Les calculs montrent que, lorsque le pédalier comporte un plateau circulaire et des pédales « VISTA », et à vitesse angulaire de la manivelle constante (θ₁, θ₂, θ₃, sont égaux), la vitesse angulaire de la droite D augmente continûment dans les quadrants antérieurs supérieur et inférieur depuis sa valeur minimale w₁ atteinte au point mort haut (en B₁) jusqu'à sa valeur maximale w₃ atteinte au point mort bas (en B₃), et décroît continûment dans les quadrants postérieurs inférieur et supérieur en passant de B₃ à B₁. Par la suite, les vitesses angulaires précédemment définies conserveront les mêmes références que le pédalier soit conforme à l'invention ou bien qu'il comporte un plateau circulaire.

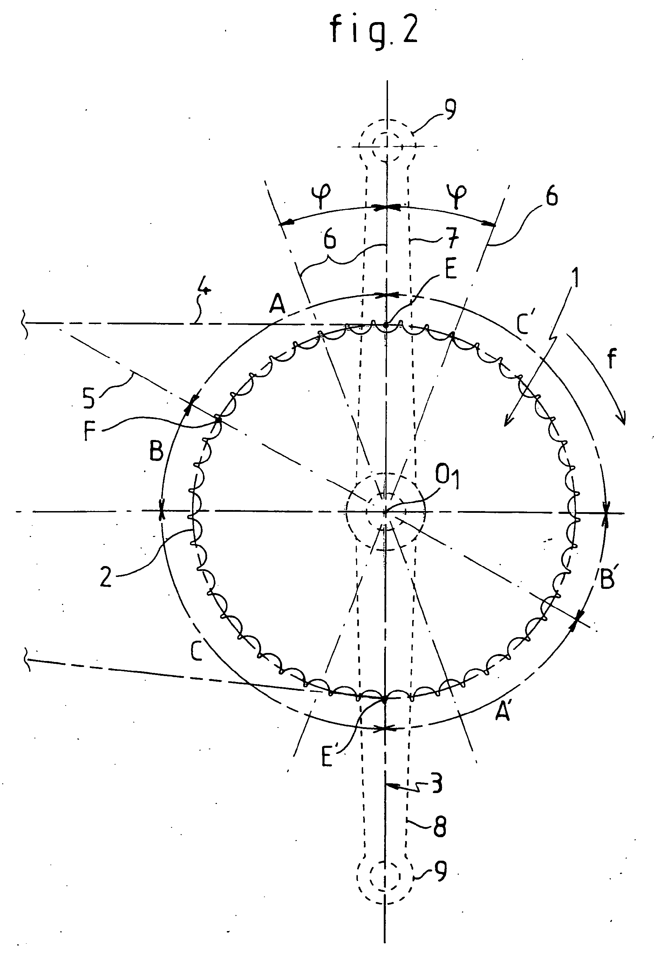

La figure 2 montre un engrenage à chaîne formé par un plateau 1 appartenant à un pédalier conforme à l'invention, et qui permet, rappelons le, d'obtenir une vitesse angulaire de la droite D globalement constante lorsque la pédale décrit le quadrant antérieur supérieur. La ligne primitive de la denture de l'engrenage est repérée 2. On appellera ligne primitive ce qui correspond au rayon primitif dans le cas d'un plateau circulaire. De plus, on appellera rayon en un point de la ligne primitive la distance séparant ce point et l'axe de pédalier O₁. Le plateau 1 comporte une partie gauche et une partie droite délimitées par l'axe 3 (vertical sur la figure). La partie gauche du plateau 1 est divisée en plusieurs zones délimitées par des angles mesurés à partir de l'axe 3 positivement dans le sens contraire à la rotation du plateau 1. Le sens de rotation du plateau 1 lors de l'entraînement de la chaîne 4 est indiqué par la flèche f de la figure 2. Les valeurs angulaires indiquées par la suite ne servent qu'à illustrer le présent exemple et peuvent de ce fait varier légèrement en fonction notamment de la construction de la bicyclette (dimensions et angles du cadre) et/ou des goûts et de l'anatomie du cycliste.

Le plateau 1 comprend une première zone A (0 degré à 60 degrés) où la ligne primitive 2 de la denture passe de son rayon minimal à son rayon maximal. Le point E correspond à l'intersection entre la ligne primitive 2 et l'axe 3, et le rayon minimal de la ligne primitive 2 est égal à la distance entre le point E et le point O₁ (axe du pédalier). L'axe 5 passant par le centre O₁ est orienté selon un angle de 60 degrés par rapport à l'axe 3 et l'intersection entre l'axe 5 et la ligne primitive 2 est repérée F. La distance entre les points O₁ et F correspond au rayon maximal de la ligne primitive 2. L'augmentation de la valeur du rayon de la ligne primitive 2 est légère et continue. Dans un mode de réalisation particulier, cet accroissement est linéaire en fonction de la valeur de l'angle que forme la droite passant par le point de la ligne primitive et par l'axe du pédalier O₁, par rapport à l'axe 3 passant par les points E,E' de la ligne primitive 2 de rayon minimum. Le plateau 1 comporte une seconde zone B (60 degrés à 90 degrés) où le rayon de la ligne primitive 2 reste constant et égal au rayon maximal. Enfin, une troisième zone C (90 degrés à 180 degrés) où le rayon de la ligne primitive 2 retrouve sa valeur minimale en un point E' symétrique du point E par rapport à O₁. Elle termine la partie gauche du plateau 1. La diminution du rayon dans cette zone est progressive et constante afin que le changement de rayon ne provoque pas d'à-coup dans le mouvement de la pédale et garantisse un pédalage harmonieux. Dans un mode de réalisation particulier, cette diminution est linéaire en fonction de la valeur de l'angle que forme la droite passant par le point de la ligne primitive et par l'axe du pédalier O₁, par rapport à l'axe 3 passant par les points E,E' de la ligne primitive 2 de rayon minimum. Par ailleurs, le plateau peut ne comporter que les zones A et C qui sont alors adjacentes pour une valeur de l'angle comprise entre 60 et 90 degrés.

On retrouve naturellement sur la partie droite du plateau 1 les mêmes zones, référencées A', B' et C' disposées de sorte que le plateau 1 d'un pédalier conforme à l'invention comporte deux courbes similaires successives ayant une symétrie centrale unique par rapport à l'axe du pédalier O₁, et aucune symétrie axiale au contraire des ellipses.

Le pédalier est prévu pour que le rayon de la ligne primitive 2 correspondant au point de tangence du brin tendu de la chaîne 4 soit minimum lorsque les pédales sont aux points morts haut et bas. Dans cette configuration, l'axe principal 6 de la manivelle adjacente 7 au plateau 1 (figure 2) coïncide avec l'axe 3, le pédalier comportant une seconde manivelle 8 dont l'axe principal est parallèle à l'axe principal 6 de la manivelle 7. Néanmoins la fixation du plateau 1 au pédalier de l'invention est telle qu'elle offre la possibilité d'orienter l'axe principal 6 de la manivelle adjacente 7 par rapport à l'axe 3 suivant un angle ϕ dit de calage compris entre 0 et 20 degrés. Ce réglage de l'angle ϕ est obtenu par des moyens de calage des manivelles 7, 8 par rapport au plateau 1, réalisés selon un mode préféré par un assemblage des manivelles 7,8 sur le plateau 1, du type emboîtement à dentures ou cannelures qui supprime les degrés de rotation desdites manivelles 7,8 par rapport audit plateau 1 suivant l'axe de rotation du pédalier. Ces cannelures ou ces dentures permettent de réaliser un calage de l'axe 6 de la manivelle 7, et donc de la manivelle 8, par rapport à l'axe 3, ledit calage étant de préférence situé entre 0 et 20 degrés. Ce réglage permet au cycliste de déterminer, en fonction notamment de la position relative de la selle par rapport à la tige de selle, la position angulaire de la manivelle par rapport à l'axe vertical passant par les points morts hauts et bas des pédales au moment où le point de tangence du brin tendu de la chaîne 4 entre dans la zone B. Plus précisément, si la selle est en arrière, l'angle ϕ devra être positif au sens trigonométrique, tandis que lorsqu'elle est en avant, l'angle ϕ devra être négatif.

En pratique, on s'arrangera pour que le rayon minimum soit inférieur et le rayon maximum soit supérieur au rayon primitif d'un plateau circulaire de même développement globalement. Quand ϕ est nul (ce qui représente la plupart des cas), lorsque le rayon de la ligne primitive 2 au point de tangence du brin tendu de la chaîne 4 est inférieur au rayon primitif d'un plateau circulaire de même développement global, on créé artificiellement une augmentation de la vitesse angulaire de la manivelle adjacente 7. La vitesse angulaire de la droite D sera augmentée en conséquence par rapport à la vitesse qu'elle aurait dans le cas d'un plateau circulaire jusqu'à une position angulaire de la manivelle adjacente 7 par rapport à un axe vertical telle que le rayon de la ligne primitive 2 au point de tangence du brin tendu de la chaîne 4 soit égal au rayon primitif du plateau circulaire de même développement global. Au-delà de cette position angulaire de la manivelle adjacente 7, la vitesse de rotation du pédalier est diminuée par rapport à celle qu'elle aurait dans le cas d'un plateau circulaire de même développement global, entraînant une diminution de la vitesse angulaire de la droite D jusqu'à ce que le point de tangence du brin tendu de la chaîne 4 entre dans la zone C du plateau 1. Autrement dit la forme du plateau 1 permet d'augmenter la vitesse angulaire de la droite D dans le secteur angulaire du quadrant antérieur supérieur du mouvement de la pédale où cette vitesse serait faible dans le cas d'une utilisation avec un plateau circulaire, et de la diminuer dans le secteur angulaire restant du même quadrant.

Le rapport entre les rayons maximum et minimum de la ligne primitive 2 est sensiblement égal (ou légèrement supérieur pour les petit et moyen plateaux : on prévoit alors une augmentation d'environ 1%) au rapport de la vitesse angulaire W₁ de la droite D lorsque la pédale est à proximité du point mort haut par la vitesse angulaire w₂ de la droite D lorsque la manivelle adjacente 7 est proche de l'horizontale, w₁ et w₂ étant déterminées dans le cas où la chaîne d'entraînement 4 coopère avec un plateau circulaire. Ainsi, si ϕ est nul, le rapport entre la vitesse angulaire moyenne θ₁ de la manivelle adjacente 7 par sa vitesse angulaire moyenne θ₂ est égal au rapport précédent des rayons. Par contre, la vitesse angulaire moyenne de la droite D est globalement constante lorsque la pédale décrit le quadrant antérieur supérieur.

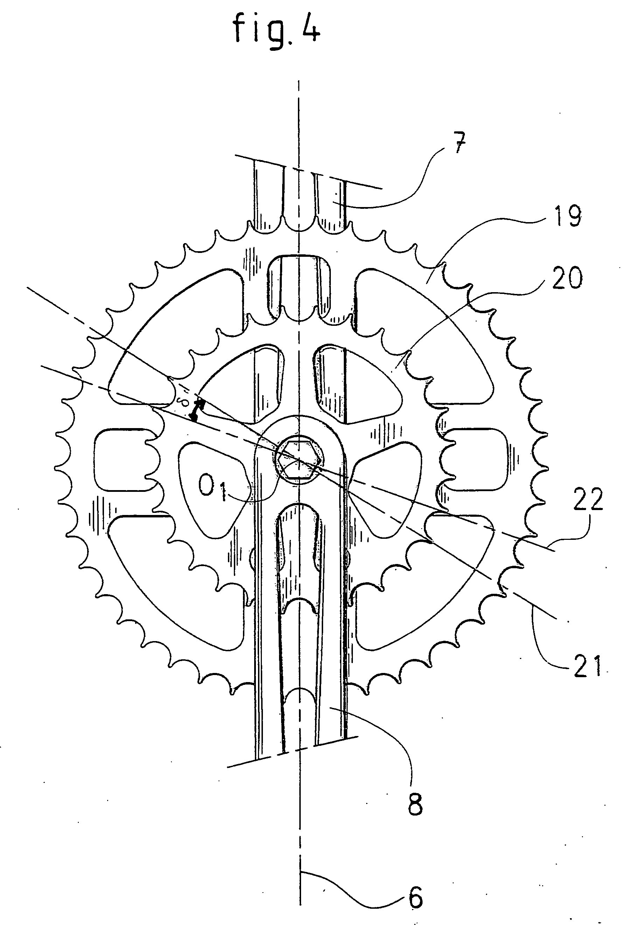

Chaque extrémité libre 9 de manivelle 7, 8 comporte une pédale 10 représentée à la figure 3 telle que décrite dans la demande de brevet internationale WO 2044/044458 au nom du demandeur. Sommairement, chaque pédale 10 comporte un corps de pédale 11 constitué d'une platine horizontale 12 munie sur l'un de ses bords longitudinaux d'un étui 13 contenant l'axe de pédale 14 libre à rotation, apte à être fixé à l'extrémité 9 d'une manivelle 7, 8. La platine 12 comporte sur sa face supérieure des moyens de blocage avant 15 et arrière 16 d'une chaussure. La platine 12 est solidarisée à l'étùi 13 de sorte que, d'une part, sa face supérieure s'étende en-dessous de l'axe de pédale 14 selon la distance a et, d'autre part appui du pied (compris dans le plan frontal passant par le métatarse du gros orteil du cycliste lorsque ce dernier pédale) se situe devant l'axe de pédale 14 suivant la distance b. Selon un mode de réalisation particulier non limitatif, le moyen de blocage avant 15 consiste en un goujon s'étendant verticalement depuis la face supérieure de la platine 12 dans sa partie avant et comprenant une collerette 17 servant de retenue. Ce goujon est apte à coopérer avec la partie avant d'une cale solidaire de la semelle de la chaussure. La cale présente une forme en V au fond duquel est pratiqué un évidement hémi-circulaire de diamètre tout juste supérieur au diamètre du goujon. Par ailleurs, l'élément d'enclenchement arrière 16 consiste en une griffe 18 articulée autour d'un axe à l'arrière de la platine 12, parallèle à l'axe de la pédale 14. L'extrémité inférieure de cette griffe 18, coopère avec un ressort de rappel pour supprimer le pivotement entraîné par l'application d'une force sur l'extrémité supérieure. Le lecteur pourra se référer à la demande internationale susmentionnée où ce type de pédale commercialisée par le demandeur sous le nom de « VISTA » est décrit plus en détails.

Par exemple, la valeur angulaire moyenne w₁ est déterminée lorsque le pédalier comporte un plateau circulaire à partir de la plage de valeur prise par la vitesse angulaire instantanée de la droite D lorsque l'axe principal 6 de la manivelle adjacente 7 tourne d'une position verticale jusqu'à une position inclinée de 30 degrés par rapport à la verticale, position où la pédale 10 se situe dans le quadrant antérieur supérieur. De même, la vitesse angulaire moyenne w₂ est déterminée à partir de la plage de valeur prise par la vitesse angulaire instantanée de la droite D lorsque l'axe principal 6 de la manivelle adjacente 7 tourne d'une position inclinée de 70 degrés par rapport à la verticale à une position où il est à l'horizontale. En pratique, ce rapport est à peu près égal à 1,04, mais il est à noter qu'il dépend de la valeur des distances a, b.

Selon un autre objet de l'invention, le pédalier se compose de deux plateaux 19,20 tels que représentés en figure 4. Les deux plateaux 19,20 ont une conception identique, conforme aux caractéristiques techniques décrites précédemment, à savoir une première zone A où la ligne primitive augmente continûment depuis son rayon minimum jusqu'à son rayon maximum, éventuellement une seconde zone B où la ligne primitive reste constante et égale au rayon maximum, puis une troisième zone C où la ligne primitive décroît continûment depuis son rayon maximum jusqu'à son rayon minimum, avec la possibilité d'orienter les manivelles 7,8 suivant un anglet ϕ de calage par rapport aux plateaux 19,20. Ils présentent des diamètres différents, l'un 19 constituant le grand plateau du pédalier et l'autre 20 le petit plateau.

Selon un mode remarquable de conception, les plateaux 19,20 présentent un angle de calage δ entre l'axe 21, passant par le point O₁ et par le rayon maximal de la ligne primitive du grand plateau 19, et l'axe 22, passant par le point O₁ et par le rayon maximal de la ligne primitive du petit plateau 20.

L'angle de calage δ entre les deux plateaux 19,20 est réglable et permet avantageusement d'optimiser les conditions de pédalage de l'utilisateur, selon que la chaîne 4 soit positionnée sur le grand plateau 19 ou sur le petit plateau 20. En effet, selon les conditions d'utilisation, le point de tangence de la chaîne 4 varie du fait de la différence de diamètre entre lesdits plateaux 19,20, ce qui influe sur la position de l'utilisateur. Ainsi, l'utilisateur aura le buste penché vers l'avant lorsque la chaîne 4 engrène avec le grand plateau 19 et le buste redressé lorsque la chaîne 4 engrène sur le petit plateau 20. Cette position du buste modifie considérablement la position des chevilles par rapport aux jambes ; d'où l'importance de pouvoir modifier l'angle de calage δ entre les deux plateaux 19,20 pour obtenir une position du point de tangence offrant les conditions optimales de pédalage propre à chaque utilisateur.

Selon un mode préféré de réalisation, non représenté sur les figures, les moyens de calage entre les deux plateaux 19,20 sont constitués par un assemblage du type emboîtement à dentures ou cannelures qui permet de rendre solidaire en rotation les deux plateaux 19,20, avec la possibilité de modifier l'angle de calage δ pour optimiser les conditions de pédalage de l'utilisateur.

Enfin, le lecteur comprendra que le pédalier conforme à l'invention doit comporter simultanément des pédales du type « VISTA » et au moins un plateau tel que précédemment décrit car, dans l'hypothèse où le pédalier serait muni de pédales classiques, les calculs montrent que le rapport entre le rayon minimum et le rayon maximum de la ligne primitive 2 serait égal à 1,25. Le couple délivré par le plateau 1 dépendant directement de la valeur du rayon de la ligne primitive 2 varierait selon le même rapport. De plus, toujours dans cette hypothèse, bien que la vitesse angulaire de la droite D soit globalement constante, la vitesse du point d'appui du pied sur la platine de la pédale varierait dans le même rapport : le rapport de la vitesse de ce point au point mort haut par sa vitesse lorsque la manivelle est horizontale serait de 1,25, le pédalage n'étant alors pas harmonieux et particulièrement fatiguant d'un point de vue musculaire.

Enfin, il va de soi que les exemples que l'on vient de donner ne sont que des illustrations particulières en aucun cas limitatives quant aux réalisations de pédalier conforme à l'invention selon les revendications qui suivent.

## Revendications

1. Pédalier de cycle comportant un arbre, une paire de manivelle (7, 8) et au moins un engrenage à chaîne apte à coopérer avec une chaîne d'entraînement (4), chaque manivelle (7 , 8) supportant à son extrémité libre (9) une pédale (10) comportant un corps de pédale (11) constitué d'une platine (12) munie sur sa face supérieure de moyens de blocage avant (15) et arrière (16) d'une chaussure et sur l'un de ses bords longitudinaux d'un étui (13) contenant un axe dit de pédale (14), libre à rotation, apte à être fixé à l'extrémité libre (9) d'une manivelle (7, 8), la platine (12) étant solidarisée à l'étui (13) de sorte que d'une part, sa face supérieure s'étende sous l'axe de pédale (14) suivant une distance a et que d'autre part l'axe d'appui du pied sur la platine (12) appartenant au plan frontal du cycliste passant par le métatarse de son gros orteil lorsqu'il pédale se situe devant l'axe de pédale (14) suivant une distance b **caractérisé en ce que** l'engrenage à chaîne consiste en au moins un plateau (1) denté à diamètre variable présentant une symétrie centrale unique par rapport à l'axe de pédalier (O₁), chaque moitié du plateau (1) ayant au moins une première zone (A) où la ligne primitive (2) de la denture augmente continûment depuis son rayon minimum jusqu'à son rayon maximum, et une seconde zone (C) où le rayon de la ligne primitive (2) décroît continûment jusqu'à sa valeur minimale, l'axe principal (6) de la manivelle adjacente (7) au plateau (1) formant un anglet ϕ dit de calage, réglable, avec l'axe (3) reliant les points (E, E') de la ligne primitive (2) pour lesquels le rayon est minimum.

2. Pédalier de cycle selon la revendication précédente **caractérisé en ce que** le rapport du rayon maximum de la ligne primitive (2) par son rayon minimum est globalement égal ou légèrement supérieur au rapport de la vitesse angulaire moyenne (w₁) de la droite D reliant l'axe de pédalier (O₁) au point d'appui (B₁, B₂, B₃) du pied du cycliste sur la pédale (10) lorsqu'elle se situe à proximité du point mort haut par la vitesse angulaire moyenne (w₂) de ladite droite D lorsque la manivelle (7, 8) supportant ladite pédale (10) est à proximité d'une position horizontale, les vitesses angulaires moyennes (w₁, w₂) étant déterminées dans le cas où la chaîne d'entraînement (4) coopère avec un plateau circulaire.

3. Pédalier de cycle selon la revendication précédente **caractérisé en ce que** le plateau (1) comporte une zone (B) intercalée entre les zones (A), (C), pour laquelle le rayon de la ligne primitive (1) est constant et égal au rayon maximum.

4. Pédalier de cycle selon l'une quelconque des revendications précédentes **caractérisé en ce que** l'angle de calage ϕ est compris entre 0 et 20 degrés.

5. Pédalier de cycle selon l'une quelconque des revendications 3 ou 4 **caractérisé en ce que** la zone (A) s'étend dans le secteur angulaire compris entre 0 et 60 degrés, la zone (B) dans le secteur angulaire compris entre 60 et 90 degrés, et la zone (C) dans le secteur angulaire compris entre environ 90 et 180 degrés, les angles précédents étant d'une part mesurés à partir de l'axe (3) reliant les points (E, E') de la ligne primitive (2) pour lesquels le rayon est minimum, et d'autre part mesurés positivement dans le sens contraire à la rotation du plateau (1) lors de l'entraînement de la chaîne (4).

6. Pédalier de cycle selon l'une quelconque des revendications précédentes **caractérisé en ce que** la valeur du rayon en un point de la ligne primitive (2) de la zone (A) du plateau (1) croit linéairement en fonction de la valeur de l'angle que forme la droite passant par ce point et par l'axe du pédalier (O₁), par rapport à l'axe (3) passant par les points (E, E') de la ligne primitive (2) de rayon minimum.

7. Pédalier de cycle selon l'une quelconque des revendications précédentes **caractérisé en ce que** la valeur du rayon en un point de la ligne primitive (2) de la zone (C) du plateau (1) décroît linéairement en fonction de la valeur de l'angle que forme la droite passant par ce point et par l'axe de pédalier (O₁), par rapport à l'axe (3) passant par les points (E, E') de la ligne primitive (2) de rayon minimum.

8. Pédalier de cycle selon l'une quelconque des revendications 2 à 7 **caractérisé en ce que** la vitesse angulaire moyenne (w₁) est déterminée à partir de la plage de valeur prise par la vitesse angulaire instantanée de la droite (D) lorsque l'axe principal (6) de la manivelle (7, 8) supportant la pédale (10) tourne d'une position verticale jusqu'à une position inclinée de 30 degrés par rapport à la verticale, position où la pédale (10) se situe dans le quadrant antérieur supérieur de sa trajectoire au cours d'un cycle de pédalage.

9. Pédalier de cycle selon l'une quelconque des revendications 2 à 8 **caractérisé en ce que** la vitesse angulaire moyenne (w₂) est déterminée à partir de la plage de valeur prise par la vitesse angulaire instantanée de la droite (D) lorsque l'axe principal (6) de la manivelle (7, 8) supportant la pédale (10) tourne d'une position inclinée de 70 degrés par rapport à la verticale, position où la pédale (10) se situe dans le quadrant antérieur supérieur de sa trajectoire au cours d'un cycle de pédalage, jusqu'à une position où ladite manivelle (7, 8) est horizontale.

10. Pédalier de cycle selon l'une quelconque des revendications précédentes, **caractérisé en ce qu'**il comprend deux plateaux (19,20) dentés et de diamètres variables, présentant un angle de calage δ réglable entre lesdits plateaux (19,20).

11. Pédalier de cycle selon l'une quelconque des revendications précédentes **caractérisé en ce que** le moyen de blocage avant (15) consiste en un goujon s'étendant verticalement depuis la face supérieure de la platine (12) dans sa partie avant, comprenant une collerette de retenue (17), ledit goujon étant apte à coopérer avec une forme complémentaire pratiquée dans la partie avant d'une cale solidaire de la semelle de la chaussure du cycliste, et **en ce que** le moyen de blocage arrière (16) consiste en une griffe (18) articulée autour d'un axe parallèle à l'axe de pédale (14), la rotation étant obtenue par application d'un effort par le cycliste sur son extrémité supérieur, et dont l'extrémité inférieure coopère avec un ressort de rappel.

## Claims

1. Cycle crank gear comprising a shaft, a crank pair (7, 8) and at least one chain gear suitable for engaging with a driving gear (4), each crank (7, 8) supporting at the free end (9) thereof a pedal (10) comprising a pedal body (11) consisting of a plate (12) provided on the top face thereof with front (15) and rear (16) shoe locking means and on one of the longitudinal edges thereof with a casing (13) containing a so-called pedal shaft (14), free in rotation, suitable for being secured on the free end (9) of a crank (7, 8), the plate (12) being rigidly connected to the casing (13) such that, firstly, the top face thereof extends under the pedal shaft (14) along a distance a and, secondly, the shaft supporting the foot on the plate (12) belonging to the cyclist's front plane passing through the metatarsal of the big toe of same while pedalling is located in front of the pedal shaft (14) along a distance b **characterised in that** the chain gear consists of at least one variable diameter geared plate (1) having a single central symmetry with respect to the crank gear shaft (O₁), each half of the plate (1) having at least a first zone (A) where the pitch line (2) of the toothing increases continuously from the minimum radius thereof to the maximum radius thereof, and a second zone (C) where the radius of the pitch line (2) decreases continuously to the minimum value thereof, and a second zone (C) where the radius of the pitch line (2) decreases continuously to the minimum value thereof, the main shaft (6) of the adjacent crank (7) to the plate (1) forming a so-called adjustable blocking angle ϕ with the shaft (3) connecting the points (E, E') of the pitch line (2) for which the radius is minimum.

2. Cycle crank gear according to the above claim **characterised in that** the ratio of the maximum radius of the pitch line (2) with respect the minimum radius is overall equal or slightly greater than the ratio of the mean angular speed (w₁) of the line D joining the crank gear shaft (O₁) to the support point (B₁, B₂, B₃) of the cyclist's foot on the pedal (10) when it is located in the vicinity of the top dead centre with respect to the mean angular speed (w₂) of said line D when the crank (7, 8) supporting said pedal (10) is in the vicinity of a horizontal position, the mean angular speeds (w₁, w₂) being determined if the driving chain (4) engages with a circular plate.

3. Cycle crank gear according to the above claim **characterised in that** the plate (1) comprises a zone (B) inserted between the zones (A), (C), for which the radius of the pitch line (1) is constant and equal to the maximum radius.

4. Cycle crank gear according to any of the above claims **characterised in that** the blocking angle ϕ is between 0 and 20 degrees.

5. Cycle crank gear according to any of claims 3 or 4 **characterised in that** the zone (A) extends in the angular sector between 0 and 60 degrees, the zone (B) in the angular sector between 60 and 90 degrees, and the zone (C) in the angular sector between approximately 90 and 180 degrees, the previous angles being firstly measured from the shaft (3) joining the points (E, E') of the pitch line (2) for which the radius is minimum, and, secondly, measured positively in the direction opposite the rotation of the plate (1) during the drive of the chain (4).

6. Cycle crank gear according to any of the above claims **characterised in that** the value of the radius at a point of the pitch line (2) of the zone (A) of the plate (1) increases linearly as a function of the value of the angle formed by the line passing via said point and by the crank gear shaft (O₁), with respect to the shaft (3) passing through the points (E, E') of the pitch line (2) having a minimum radius.

7. Cycle crank gear according to any of the above claims **characterised in that** the value of the radius at one point of the pitch line (2) of the zone (C) of the plate (1) decreases linearly as a function of the value of the angle formed by the line passing through said point and by the crank gear shaft (O₁), with respect to the shaft (3) passing through the points (E, E') of the pitch line (2) having a minimum radius.

8. Cycle crank gear according to any of claims 2 to 7 **characterised in that** the mean angular speed (w₁) is determined on the basis of the value range adopted by the instantaneous angular speed of the line (D) when the main shaft (6) of the crank (7, 8) supporting the pedal (10) rotates by a vertical position to a position inclined by 30 degrees with respect to the vertical, where the pedal (10) is located in the upper front quadrant of the trajectory thereof during a pedalling cycle.

9. Cycle crank gear according to any of claims 2 to 8 **characterised in that** the mean angular speed (w₂) is determined on the basis of the value range adopted by the instantaneous angular speed of the line (D) when the main shaft (6) of the crank (7, 8) supporting the pedal (10) rotates from a position inclined by 70 degrees with respect to the vertical, where the pedal (10) is located in the upper front quadrant of the trajectory thereof during a pedalling cycle, to a position where said crank (7, 8) is horizontal.

10. Cycle crank gear according to any of the above claims, **characterised in that** it comprises two variable diameter geared plates (19, 20), having an adjustable blocking angle δ between said plates (19, 20).

11. Cycle crank gear according to any of the above claims **characterised in that** the front locking means (15) consists of a stud extending vertically from the top face of the plate (12) in the front part thereof, comprising a retaining ring (17), said stud being suitable for engaging with a complementary shape produced in the front part of a block rigidly connected to the sole of the cyclist's shoe, and **in that** the rear locking means (16) consists of a claw (18) pivoting about a shaft parallel with the pedal shaft (14), rotation being obtained by the application of an effort by the cyclist on the top end thereof, and wherein the lower end engages with a return spring.

## Patentansprüche

1. Fahrradkurbelgarnitur, die eine Welle, ein Kurbelpaar (7, 8) und zumindest ein Kettengetriebe umfasst, das imstande ist, mit einer Antriebskette (4) zusammenzuwirken, wobei jede Kurbel (7, 8) an ihrem freien Ende (9) ein Pedal (10) trägt, das einen Pedalkörper (11) umfasst, der aus einer Platine (12) besteht, die auf ihrer Oberseite mit vorderen (15) und hinteren (16) Mitteln zum Blockieren eines Schuhs und an einem ihrer Längsränder mit einem Gehäuse (13) versehen ist, das eine so genannte Pedalachse (14) beinhaltet, die frei drehbar und imstande ist, am freien Ende (9) einer Kurbel (7, 8) befestigt zu werden, wobei die Platine (12) mit dem Gehäuse (13) verbunden ist, so dass sich einerseits ihre Oberseite gemäß einer Distanz a unter der Pedalachse (14) erstreckt, und dass sich andererseits die Stützachse des auf der Platine (12) befindlichen Fußes, welche der Frontalebene des Radfahrers angehört, die beim Treten der Pedale durch den Mittelfußknochen seiner großen Zehe verläuft, vor der Pedalachse (14) gemäß einer Distanz b befindet, **dadurch gekennzeichnet, dass** das Kettengetriebe aus zumindest einem gezahnten Kettenblatt (1) mit variablem Durchmesser besteht, das eine einmalige, zentrale Symmetrie in Bezug auf die Kurbelgarniturachse (O₁) aufweist, wobei jede Hälfte des Kettenblattes (1) zumindest einen ersten Bereich (A), in dem die Teillinie (2) der Zahnung ausgehend von ihrem minimalen Radius bis zu ihrem maximalen Radius kontinuierlich zunimmt, und einen zweiten Bereich (C) besitzt, in dem der Radius der Teillinie (2) bis zu seinem Minimalwert kontinuierlich abnimmt, wobei die Hauptachse (6) der an das Kettenblatt (1) angrenzenden Kurbel (7) mit der Achse (3), welche die Punkte (E, E') der Teillinie (2) verbindet, für welche der Radius minimal ist, einen so genannten verstellbaren Versetzungswinkel ϕ bildet.

2. Fahrradkurbelgarnitur nach dem vorhergehenden Anspruch, **dadurch gekennzeichnet, dass** der Quotient aus dem maximalen Radius der Teillinie (2) und ihrem minimalen Radius im Allgemeinen gleich groß oder leicht größer ist als der Quotient aus der durchschnittlichen Winkelgeschwindigkeit (w₁) der Geraden D, welche die Kurbelgarniturachse (O₁) mit dem Stützpunkt (B₁, B₂, B₃) des Fußes des Radfahrers auf dem Pedal (10) verbindet, wenn es sich in der Nähe des oberen Totpunktes befindet, und der durchschnittlichen Winkelgeschwindigkeit (w₂) der besagten Geraden D, wenn sich die Kurbel (7, 8), welche das besagte Pedal (10) trägt, in der Nähe einer waagrechten Position befindet, wobei die durchschnittlichen Winkelgeschwindigkeiten (w₁, w₂) festgelegt sind, für den Fall, dass die Antriebskette (4) mit einem kreisrunden Kettenblatt zusammenwirkt.

3. Fahrradkurbelgarnitur nach dem vorhergehenden Anspruch, **dadurch gekennzeichnet, dass** das Kettenblatt (1) einen Bereich (B) aufweist, der zwischen die Bereiche (A) und (C) eingeschoben ist und für den der Radius der Teillinie (2) konstant und gleich groß wie der maximale Radius ist.

4. Fahrradkurbelgarnitur nach einem der vorhergehenden Ansprüche, **dadurch gekennzeichnet, dass** der Versetzungswinkel ϕ zwischen 0 und 20 Grad beträgt.

5. Fahrradkurbelgarnitur nach einem der Ansprüche 3 oder 4, **dadurch gekennzeichnet, dass** sich der Bereich (A) im Winkelsektor zwischen 0 und 60 Grad erstreckt, der Bereich (B) im Winkelsektor zwischen 60 und 90 Grad, und der Bereich (C) im Winkelsektor zwischen ungefähr 90 und 180 Grad, wobei die vorhergehenden Winkel einerseits ausgehend von der Achse (3), welche die Punkte (E, E') der Teillinie (2) verbindet, für welche der Radius minimal ist, und andererseits positiv gegen die Rotationsrichtung des Kettenblattes (1) bei Antrieb der Kette (4) gemessen werden.

6. Fahrradkurbelgarnitur nach einem der vorhergehenden Ansprüche, **dadurch gekennzeichnet, dass** der Wert des Radius an einem Punkt der Teillinie (2) des Bereichs (A) des Kettenblattes (1) linear zunimmt, und zwar in Abhängigkeit vom Wert des Winkels, den die Gerade, welche durch diesen Punkt und durch die Kurbelgarniturachse (O₁) verläuft, in Bezug auf die Achse (3), welche durch die Punkte (E, E') der Teillinie (2) mit minimalem Radius verläuft, bildet.

7. Fahrradkurbelgarnitur nach einem der vorhergehenden Ansprüche, **dadurch gekennzeichnet, dass** der Wert des Radius an einem Punkt der Teillinie (2) des Bereichs (C) des Kettenblattes (1) linear abnimmt, und zwar in Abhängigkeit vom Wert des Winkels, den die Gerade, welche durch diesen Punkt und durch die Kurbelgarniturachse (O₁) verläuft, in Bezug auf die Achse (3), welche durch die Punkte (E, E') der Teillinie (2) mit minimalem Radius verläuft, bildet.

8. Fahrradkurbelgarnitur nach einem der Ansprüche 2 bis 7, **dadurch gekennzeichnet, dass** die durchschnittliche Winkelgeschwindigkeit (w₁) bestimmt wird, ausgehend von der Wertspanne, welche die momentane Winkelgeschwindigkeit der Geraden (D) einnimmt, wenn sich die Hauptachse (6) der Kurbel (7, 8), welche das Pedal (10) trägt, von einer senkrechten Position bis in eine in Bezug auf die senkrechte Position um 30 Grad geneigte Position dreht, eine Position, wo sich das Pedal (10) im vorherigen, oberen Quadranten seiner Laufbahn während eines Tretzyklus befindet.

9. Fahrradkurbelgarnitur nach einem der Ansprüche 2 bis 8, **dadurch gekennzeichnet, dass** die durchschnittliche Winkelgeschwindigkeit (w₂) bestimmt wird, ausgehend von der Wertspanne, welche die momentane Winkelgeschwindigkeit der Geraden (D) einnimmt, wenn sich die Hauptachse (6) der Kurbel (7, 8), welche das Pedal (10) trägt, von einer in Bezug auf die senkrechte Position um 70 Grad geneigten Position, eine Position, wo sich das Pedal (10) im vorherigen, oberen Quadranten seiner Laufbahn während eines Tretzyklus befindet, bis in eine Position dreht, wo die besagte Kurbel (7, 8) waagrecht liegt.

10. Fahrradkurbelgarnitur nach einem der vorhergehenden Ansprüche, **dadurch gekennzeichnet, dass** sie zwei gezahnte Kettenblätter (19, 20) mit variablen Durchmessern umfasst, die einen verstellbaren Versetzungswinkel δ zwischen den besagten Kettenblättern (19, 20) aufweisen.

11. Fahrradkurbelgarnitur nach einem der vorhergehenden Ansprüche, **dadurch gekennzeichnet, dass** das vordere Blockiermittel (15) aus einem Bolzen besteht, der sich ausgehend von der Oberseite der Platine (12) in ihrem vorderen Bereich senkrecht erstreckt und einen Rückhaltekragen (17) umfasst, wobei der besagte Bolzen imstande ist, mit einer komplementären Form zusammenzuwirken, die im vorderen Bereich einer Platte ausgebildet ist, welche mit der Schuhsohle des Radfahrers verbunden ist, und dadurch, dass das hintere Blockiermittel (16) aus einer Klaue (18) besteht, die gelenkig um eine Achse gelagert ist, die parallel zur Achse des Pedals (14) verläuft, wobei die Drehbewegung durch Anwendung einer Kraft durch den Radfahrer auf seine obere Extremität erhalten wird, und dessen untere Extremität mit einer Rückholfeder zusammenwirkt .
